# EUROPEAN PATENT APPLICATION

(11) **EP 1 411 396 A1**
(43) Date of publication of application: **21.04.2004**
(21) Application number: 02741319.4
(22) Date of filing: 26.06.2002
(51) Int. Cl.: G03G 15/20, B29C 41/22

(54) **ENDLESS BELT AND METHOD OF MANUFACTURING THE ENDLESS BELT**

(30) Priority: 28.06.2001 JP 2001197164; 27.09.2001 JP 2001297898
(71) Applicant: Toho Kasei Co., Ltd., Yamatokoriyama-shi, Nara 639-1031 (JP)
(72) Inventor: YOSHIDA, Haruhiko, Yamatokoriyama-shi, Nara 639-1031 (JP); HIGUCHI, Takeshi, Yamatokoriyama-shi, Nara 639-1031 (JP); MATUI, Ryohei, Yamatokoriyama-shi, Nara 639-1031 (JP); MAEDA, Yoshiko, Yamatokoriyama-shi, Nara 639-1031 (JP)
(74) Representative: Hafner, Dieter, Dr. Dipl.-Phys.
(86) International application number: PCT/JP2002/006390
(87) International publication number: WO 2003/003128

(57) **Abstract**

An annular endless belt (1), comprising a release layer (2) formed of fluororesin and having an outersurface formed of a molded surface disposed as an outermost layer, a support layer (6) disposed as an innermost layer, and an elastic layer (4) disposed between the outermost layer and the innermost layer, whereby the fluororesin layer as the release layer can be formed by coating on the outer surface of the endless belt without hardening the elastic layer thereof used as the fixing belt of a color copying machine.

## Description

### TECHNICAL FIELD

The present invention relates to an endless belt used, e.g., for a full color image fixing belt, which is employed in a fixing unit for fixing, by heating, toner images transferred to a transfer member such as a transfer paper or the like in an apparatus such as an electrophotographic copying machine, a fax machine, a printer or the like, and also to a method of manufacturing the same.

### BACKGROUND ART

In an image forming apparatus such as an electrophotographic copying machine, a fax machine, a printer or the like, toners on, e.g., a transfer paper as a transfer member are heated and fused at a final stage of printing or copying, and are fixed on the transfer paper.

A general method of such fixing is a heat fixing method. Conventionally, a heat roller fixing method is widely used therefor. According to the heat roller fixing method, a pair of rollers composed of a rubber roller and a heat roller, which has a thermal heater inside thereof and has an outer circumference coated with a rubber or resin having a good release property, are pressed against each other. A transfer paper having a toner image formed thereon is passed between the rollers to heat and fuse the toners, whereby the toners are fusion-bonded to the transfer paper. On the one hand, this heat roller fixing method is suitable for high speed copying because of keeping the heat roller in its entirety at a given temperature, but on the other hand, it has a drawback in its long waiting time. More specifically, at the time of starting the operation of the apparatus, it is necessary to heat the heat roller to a given temperature, so that there occurs a long waiting time between when a power supply is switched on and when the apparatus becomes able to be operated. Moreover, since the heat roller in its entirety needs to be heated, the power consumption is high.

Thus, in recent years, there has been proposed a fixing method in which toners on a transfer paper are heated by a heater via an endless belt in the form of a film. According to this endless belt fixing method, a fixing belt, and a rubber roller are pressed against each other. Between them, a transfer paper having a toner image formed thereon is passed and heated by a heater to fusion-bond and fix the toners onto the transfer paper. This fixing method realizes essentially direct heating by the heater with only an intervening belt in the form of a thin film. Accordingly, the portion to be heated reaches a given temperature in a short time, so that the waiting time after the switching on of the power supply can be significantly reduced. Furthermore, since only a portion needed to be heated is heated, it realizes an advantage of lower power consumption as well.

Conventionally, as a fixing belt to be used for the endless belt fixing method, an endless belt made of polyimide (a polyimide tube) having a coating layer of a fluororesin provided on an outer surface thereof is used, considering its heat resistance, elasticity, strength, insulating property of belt inner surface, release property of belt outer surface, and so on. Generally, such fixing belt as used for the endless belt fixing method is used, e.g., for a monochrome laser beam printer, which fixes only a monochrome toner containing carbon black as a coloring agent.

On the other hand, in a full color image forming apparatus such as a full color laser beam printer or the like, toners of four colors of red, yellow, blue and black are used. In order to fix a full color toner image, plural kinds of color tones are mixed for color mixture at their state of near fusion, so that it is required to bring the toners to fusion state. This is in contrast to the case of fixing a monochrome toner, in which the toner is merely softened and pressed for the fixing. However, in the case where a conventional fixing belt is used for a fixing unit in a full color laser beam printer, the belt does not have enough elasticity of a surface thereof to be able to sufficiently surround the color toners. As a result, it was difficult to fuse the color toners and satisfactory fixing could not be realized. Thus, conventionally, in order to provide the surface of a fixing belt with a sufficient elasticity, an elastic layer, e.g., of silicone rubber has been formed on an outer surface of a polyimide tube, which is a support layer.

In addition, it is necessary to provide a release layer formed, e.g., of a fluoro rubber on an outermost layer of the fixing belt in order to enhance release property of the toners. Conventionally, a release layer of a fluoro rubber has been formed by: forming a silicone rubber layer, as an elastic layer, on an outer surface of a polyimide tube as a support layer; coating a fluoro rubber on an outer surface of the elastic layer; and baking it at a temperature of about 250°C. Such method makes it possible to form a fluoro rubber layer on an outer surface of a silicone rubber layer without any problem, because the heat resistant temperature of silicone rubber of the elastic layer is about 250°C.

However, the conventionally used release layer formed of a fluoro rubber has had a problem in that it causes insufficient fixing property and release property of the toners. Hence, it has been studied to use a fluororesin for the release layer to have superior fixing property and release property. In order to form a fluororesin layer on an outer surface of the elastic layer, a method can be considered here such that a solution having a powder of a fluororesin dispersed therein is coated thereon, and is subjected to drying to dry the solvent, and is further subjected to heating and baking into the fluororesin layer.

However, according to such method of coating, drying and baking the fluororesin powder as described above, the fluororesin needs to be maintained at a high temperature condition for a given time during the baking thereof. In the case of polytetrafluoroethylene (PTFE), tetrafluoroethylene-perfluoroalkoxyethylene copolymer (PFA), and fluoroethylene-propylene copolymer (PFEP), for example, they need to be maintained at about 380°C for about 10 minutes.

In other words, the above-described method makes it necessary to form a silicone rubber layer, as an elastic layer, on an outer surface of a polyimide tube, as a support layer, and to coat a fluororesin on an outer surface of the elastic layer, and further to bake at a temperature of about 380°C. Accordingly, if this method is employed such that a fluororesin layer is baked on an outer surface of an elastic layer formed of silicone rubber, which has a heat resistant temperature of about 250°C, then the silicone rubber layer is hardened by heat and loses its elasticity.

### DISCLOSURE OF INVENTION

In one or more embodiments, the present invention provides an endless belt such that a fluororesin layer, as a release layer, can be formed by coating on an outer surface of an elastic layer of an endless belt to be used, e.g., for a fixing belt without hardening the elastic layer.

An endless belt according to the present invention is an annular endless belt comprising: as an outermost layer thereof, a release layer formed of a fluororesin and having an outer surface formed of a molded surface; a support layer as an innermost layer thereof; and an elastic layer disposed between the outermost layer and the inner most layer.

Since the endless belt of the present invention comprises a release layer as an outermost layer, the belt has an excellent release property. Furthermore, since the outer surface of the release layer is formed of a molded surface, the outer surface of the release layer is smooth, and has a superior release property to that of a release layer formed of a mold-free surface. It is to be noted here that the molded surface is referred to as a surface having contacted a die during molding. On the other hand, the mold-free surface is referred to as a surface not having contacted a die during molding.

Furthermore, since the endless belt of the present invention comprises an elastic layer disposed between the outermost layer and the inner most layer thereof, the belt has an excellent fixing property. Moreover, since the endless belt of the present invention comprises a support layer as the inner most layer, the belt has excellent strength.

A first method of manufacturing an endless belt according to the present invention includes the steps of: coating a release layer on an inner circumferential surface of an annular molding die; baking the release layer at a given temperature; coating an elastic layer; baking the elastic layer at a given temperature; coating a support layer; and baking the support layer at a given temperature, thereby forming an annular body, the annular body being thereafter separated from the molding die.

A second method of manufacturing an endless belt according to the present invention includes the steps of: coating a release layer on an outer circumferential surface of an annular molding die; baking the release layer at a given temperature; coating an elastic layer; baking the elastic layer at a given temperature; coating a support layer; and baking the support layer at a given temperature, thereby forming an annular body, the annular body being thereafter separated from the molding die by reversing the annular body inside out.

More specifically, according to the method: a release layer formed of the fluororesin is coated on an outer circumferential surface of an annular molding die; a first adhesive layer is coated on the release layer; the release layer and the first adhesive layer are baked at a given temperature; thereafter an elastic layer is coated on the first adhesive layer and is baked at a given temperature; thereafter a second adhesive layer is coated on the elastic layer and is dried; thereafter a support layer is coated on the second adhesive layer and is baked at a given temperature, thereby forming an annular body; and thereafter the annular body is reversed inside out, thereby separating the annular body from the molding die.

According to a conventional method, it has been necessary to form a silicone rubber layer (heat resistant temperature of about 250°C), as an elastic layer, on an outer surface of a polyimide tube, which is a support layer, and to coat a fluororesin, as a release layer, on an outer surface of the elastic layer, and further to bake the release layer at a temperature of about 380°C. Accordingly, it has had a problem in that the elastic layer is hardened by heat and loses its elasticity during the baking of the release layer. In contrast, in the method of manufacturing an endless belt according to the present invention, the order of the conventional steps is reversed in a manner that an elastic layer is formed after a release layer formed of a fluororesin is coated and baked on a molding die. Accordingly, the elastic layer is not hardened by heat during the baking of the release layer as opposed to the case of the conventional method. Thereby, it becomes possible to form, by coating, a layer (release layer) having a high heat resistant temperature on a layer (elastic layer) having a low heat resistant temperature.

Furthermore, according to the endless belt manufactured by the method of the present invention, the outer surface of the release layer is formed of a molded surface, so that the outer surface of the release layer becomes smooth, and has a superior release property to that of the release layer formed of a mold-free surface.

According to the second method of manufacturing the endless belt of the present invention, a step of reversing, inside out, the formed annular body is performed. Thereby, the following effects can be expected. Firstly, generation of wrinkles on the release layer becomes unlikely when the endless belt is ultimately made by reversing inside out. More specifically, in the case where the annular body is formed using the inner circumferential surface of the molding die, the reversing step can be omitted. However, in such case, generation of wrinkles on the surface of the release layer becomes more likely when the formed annular body shrinks by being cooled after the molding. In contrast, according to the above-described method, the release layer for the annular body is initially formed at a side inner than the support layer, so that the surface area of the release layer is formed, by the molding, to be smaller than the surface area of the support layer. By reversing it inside out, however, the surface area of the release layer becomes larger than the surface area of the support layer. Thereby, the surface of the release layer is subjected to a tensile stress, whereby generation of wrinkles becomes less likely.

Secondly, in the case where the endless belt according to the present invention is used for a fixing belt, e.g., in a printer, it becomes possible to design a nip width (contact width between the press roller and the fixing belt) to be large. More specifically, in order to prevent a transfer paper from wrapping around the fixing belt and to perform high speed operation, there is a case where the fixing belt is designed to partially have a reverse radius shape, thereby realizing a large nip width. At the reverse radius part in such case, the surface area of the release layer becomes smaller than the surface area of the support layer, so that usually generation of wrinkles on the release layer becomes more likely. However, according to the endless belt of the present invention as described above, the surface of the release layer is subjected to the tensile stress, so that generation of wrinkles can be prevented, and toner images during fixing are not influenced by the design of a large nip width.

Thirdly, use of polyimide for the support layer and silicone rubber for the elastic layer stabilizes dimensions of the molded body and makes the generation of wrinkles unlikely as well. More specifically, although polyimide and silicone rubber shrink during baking, such shrinkage is restricted by the molding die because the polyimide layer and the silicone rubber layer according to the present invention are positioned at sides outer than the molding die during the baking. Thereby, the dimensions of the molded body are stabilized, and generation of wrinkles becomes unlikely.

According to a further method of the present invention: a release layer formed of the fluororesin is coated on an outer circumferential surface of an annular molding die and is baked at a given temperature; thereafter a surface of the release layer is subjected to etching treatment; thereafter an elastic layer is coated on the etched surface of the release layer and is baked at a given temperature; thereafter an adhesive layer is coated on the elastic layer and is dried; thereafter a support layer is coated on the adhesive layer and is baked at a given temperature, thereby forming an annular body; and thereafter the annular body is reversed inside out, thereby separating the annular body from the molding die.

In such manner, without using the first adhesive layer as used in the above-described method of manufacturing the endless belt according to the present invention, an effect as obtained thereby can be similarly obtained.

### BRIEF DESCRIPTION OF DRAWINGS

Fig. 1 is a cross-sectional view of an endless belt according to the present invention.
Fig. 2 is a cross-sectional view of a main portion of Fig. 1 at A-A plane.
Fig. 3 is a cross-sectional view for explaining a method of manufacturing an endless belt according to the present invention.
Fig. 4 is a cross-sectional view of a main portion of Fig. 3 at B-B plane.
Fig. 5 is a cross-sectional view of a main portion, showing a state where an endless belt is being reversed inside out for separating the belt from a molding die.
Fig. 6 is a cross-sectional view for explaining a further method of manufacturing an endless belt according to the present invention.
Fig. 7 is a cross-sectional view of a main portion of Fig. 6 at C-C plane.

### BEST MODE FOR CARRYING OUT THE INVENTION

Hereinafter, embodiments of the present invention will be described with reference to the drawings.

### Embodiment 1

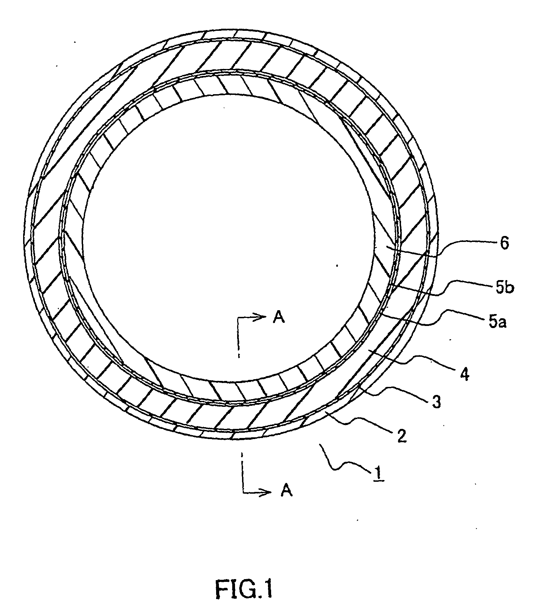

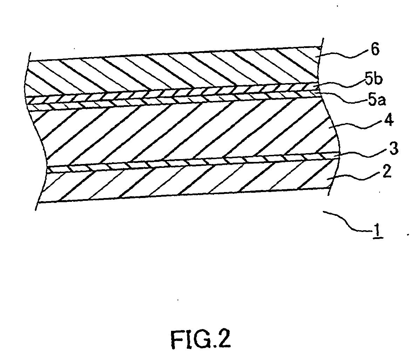

Fig. 1 is a cross-sectional view of an endless belt according to the present invention, and Fig. 2 is a cross-sectional view of a main portion of Fig. 1 at A-A plane. An endless belt 1 according to the present invention comprises: as an outermost layer, a release layer 2 formed of a fluororesin and having an outer surface formed of a molded surface; a first adhesive layer 3 disposed subsequent to the release layer 2; an elastic layer 4 disposed subsequent to the first adhesive layer 3; a second adhesive layer formed of two layers 5a and 5b subsequent to the elastic layer 4; and as an innermost layer, a support layer 6 subsequent to the adhesive layer 5b. In other words, the endless belt according to the present invention is an annular endless belt having: as an outermost layer of the endless belt 1, a release layer 2 formed of a fluororesin and having an outer surface formed of a molded surface; a support layer 6 as an innermost layer thereof; and an elastic layer 4 disposed as an intermediate layer between the outermost layer and the innermost layer.

To begin with, a release layer according to the present invention will be described. The release layer according to the present invention needs to be formed of a fluororesin and to have an outer surface formed of a molded surface. This is for enhancing the release property of the endless belt. It is preferred that the fluororesin used for the release layer be at least one selected from the group consisting of polytetrafluoroethylene (PTFE), tetrafluoroethylene-perfluoroalkoxyethylene copolymer (PFA), and fluoroethylene-propylene copolymer (PFEP). This is because these resins have superior toner release properties.

Preferably, the thickness of the release layer is 5 to 50 µm. This is because within this thickness range, the release layer has good durability to abrasion, and does not become hardened with its surface hardness being maintained high. In particular, the range of 15 to 25 µm is more preferable.

The endless belt using these fluororesins for the release layer is superior with respect to fixing property, surface hardness, surface conductivity, surface release property, surface roughness, durability, and freedom of film thickness. Its particular superiority is in toner fixing property, release property, and durability of the release layer.

Besides, based on need, the fluororesin can have a conductive material, an anti-abrasion material, and a good thermal conductive material added thereto as a filler.

Next, an elastic layer according to the present invention will be described. It is preferred that the elastic layer according to the present invention be formed of silicone rubber having type A hardness (JIS hardness) of A1 to A80 degrees. This is because within this range, the elastic layer can be prevented from lowering its strength and losing its adhesion property as well as from losing its toner fixing property. Specific examples usable for this silicone rubber are: silicone rubbers of one component system, two component system or three or more component system; silicone rubbers of LTV type, RTV type or HTV type; silicone rubbers of condensation type or addition type; and so on.

Preferably, the thickness of the elastic layer is from 30 to 2000 µm. This is because within this thickness range, the elastic layer can maintain its elasticity effect, and at the same time can have a thermal insulation property designed to be low for being able to exert energy saving effect. In particular, the range of 100 to 300 µm is more preferable.

Next, a support layer according to the present invention will be described. It is preferred that the support layer according to the present invention be formed of heat resistant synthetic resin. This is because e.g. the fixing belt in use is usually heated to a temperature of about 200°C. Furthermore, the heat resistant synthetic resin is preferred to be polyimide (PI) or polyamideimide (PAI). This is because these resins are superior in strength, heat resistance, cost, and so on.

Preferably, the thickness of the support layer is from 10 to 300 µm. This is because within this range, the support layer can maintain its strength and durability to abrasion without lowering its flexibility, and at the same time can have a thermal insulation property designed to be low for being able to exert energy saving effect. In particular, the range of 30 to 150 µm is more preferable.

Next, a first adhesive layer according to the present invention will be described. The first adhesive layer is an adhesive layer disposed between the release layer and the elastic layer. The first adhesive layer is preferred to be formed of a fluoro rubber primer. Specific examples usable therefor are fluoro rubbers of VDF-HFP type, VDF-HFP-TFE type, VDF-PFP type, VDF-PFP-TFE type, VDF-PFMVE-TFE type, VDF-CTFE type and the like. Besides, the first adhesive layer can be omitted by subjecting the surface of the release layer to etching treatment after the release layer is baked.

The thickness of the first adhesive layer is preferred to be 1 to 20 µm. This is because within this range, unevenness and hence variation of the coating does not occur, so that the coating becomes easy. In particular, the range of 2 to 10 µm is more preferable.

Next, a second adhesive layer according to the present invention will be described. The thickness of the second adhesive layer is preferred to be 2 to 10 µm. This is because within this range, better adhesion and easier coating can be realized.

Furthermore, it is preferred that the second adhesive layer be formed of two layers which are formed of a primer for silicone rubber having a thickness of 1 to 5 µm and a fluoro rubber primer having a thickness of 1 to 5 µm, respectively. This is because owing to the two-layer structure, the adhesion between the elastic layer and the support layer can be strengthened. Examples usable for the primer for the silicone rubber here are silan coupling agents such as vinylsilan, acrylsilan, epoxysilan, aminosilan, and the like. Furthermore, examples usable for the fluoro rubber primer are fluoro rubbers of VDF-HFP type, VDF-HFP-TFE type, VDF-PFP type, VDF-PFP-TFE type, VDF-PFMVE-TFE type, VDF-CTFE type, and the like.

Although not shown in the drawings, it is preferred that the endless belt according to the present invention be provided with a heating layer which generates heat based, e.g., on electromagnetic induction. This is because thereby it becomes possible to more directly heat the endless belt, and hence to shorten waiting time and increase energy saving after a power supply is switched on.

The heating layer can be provided at a position, which is not limited, and can be provided at least on one surface of the support layer, or inside the support layer as well. Besides, in the case where the heating layer is provided inside the support layer, it is preferred that the support layer and the heating layer constitute a multi-layer structure. This is because thereby the heating effect, e.g., by electromagnetic induction can be further enhanced.

The heating layer can be formed as a single layer made only of a heat generating material, but more preferably uses a mixture prepared by mixing of a filler made of a heat generating material into a heat resistant synthetic resin. The heat resistant synthetic resin is preferred to be polyimide (PI) or polyamideimide (PAI). These resins are the same as those usable for the support layer, because they are superior in strength, heat resistance, cost, and so on.

Examples usable for such heat generating material, which generates heat by e.g. electromagnetic induction, are copper (Cu), aluminum (Al), nickel (Ni), iron (Fe), tin (Sn), zinc (Zn), lead (Pb), gold (Au), silver (Ag), platinum (Pt), stainless steel, carbon (C), and the like. In particular, silver (Ag) is most preferable because of its superior heat generation performance. In the case where these heat generating materials are used as fillers, a combination of fillers made of plural kinds of such heat generating materials can be used.

In the case of using the heat generating material for the filler, the mixing ration of the filler to the heat resistant synthetic resin is preferred to be: heat resistant synthetic resin / filler = 1 weight part / 99 weight parts to 80 weight parts / 20 weight parts, more preferably heat resistant synthetic resin / filler = 10 weight parts / 90 weight parts to 50 weight parts / 50 weight parts.

Furthermore, in the case where the heat generating layer is not independently provided, at least one layer of the release layer, the support layer and the elastic layer can be allowed to contain a filler made of the heat generating material, and thereby can function also as a heat generating layer.

Besides, based on need, the elastic layer, the support layer, the first adhesive layer and the second adhesive layer can have a conductive material, a good thermal conductive material, and a tensile strength-reinforcing material added thereto as fillers.

Furthermore, the endless belt of the present invention can be used not only for a fixing belt in an electrophotographic copying machine, a fax machine, a printer or the like, but also for a backup belt, a transfer belt, an industrial belt, and so on.

### Embodiment 2

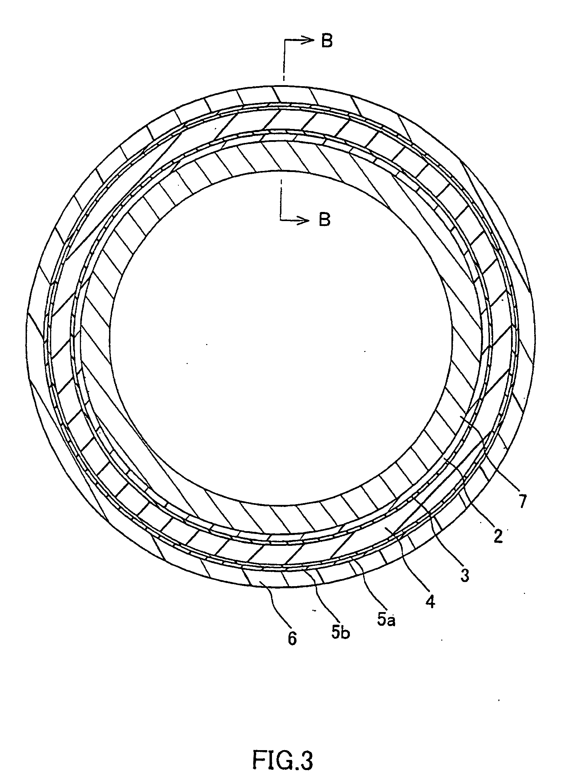

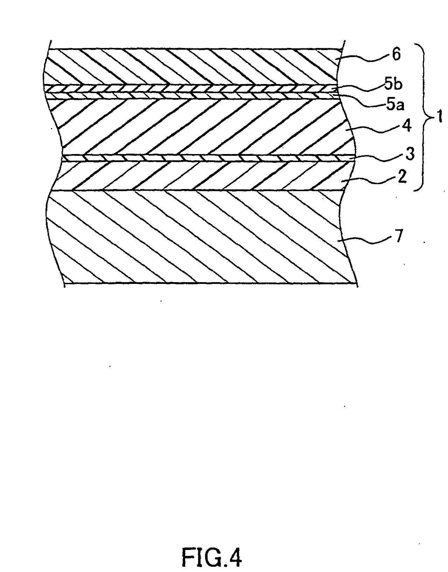

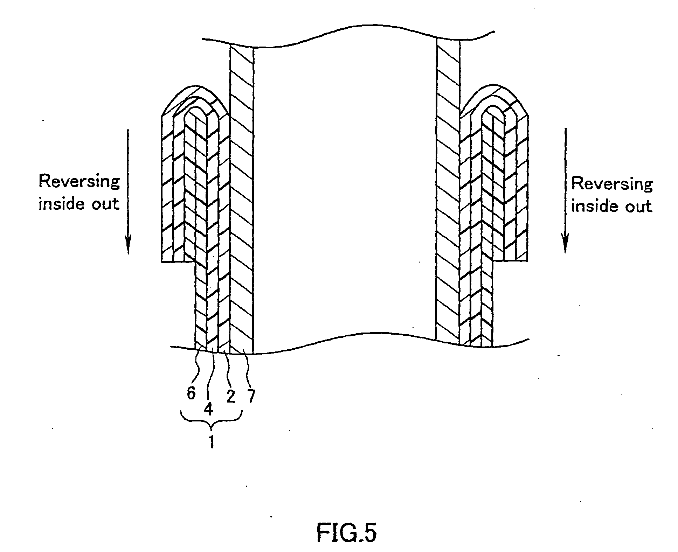

Fig. 3 is a cross-sectional view for explaining a method of manufacturing an endless belt as described in Embodiment 1, and Fig. 4 is a cross-sectional view of a main portion of Fig. 3 at B-B plane. According to a method of manufacturing an endless belt of the present Embodiment: a release layer 2 formed of a fluororesin is coated on an outer circumferential surface of an annular molding die 7; a first adhesive layer 3 is coated on the release layer 2; thereafter these are baked at a given temperature; thereafter an elastic layer 4 is coated on the first adhesive layer 3 and is baked at a given temperature; thereafter a second adhesive layer formed of two adhesive layers 5a and 5b is coated on the elastic layer 4 and is dried; and thereafter a support layer 6 is coated on the second adhesive layer 5b and is baked at a given temperature. Subsequently, as shown in Fig. 5, an endless belt 1 is separated from the molding die 7 by being reversed inside out and pulled. Thereby, as shown in Fig. 1, the annular endless belt 1 according to the present invention is completed, which comprises: as an outermost layer thereof, a release layer 2 formed of a fluororesin and having an outer surface formed of a molded surface; a support layer 6 as an innermost layer thereof; and an elastic layer 4 disposed as an intermediate layer between the outermost layer and the inner most layer. It is to be noted that in Fig. 5, the adhesive layer is omitted.

The baking temperature for the release layer is preferred to be 330 to 430°C. This is because within this temperature range, the release layer has a good film forming property, and does not become deteriorated. Furthermore, the thickness of the releasing layer, after the baking, is preferred to be 5 to 50 µm. This is because within this thickness range, the release layer has good durability to abrasion, and does not become hardened with its surface hardness being maintained high. In particular, the range of 15 to 25 µm is more preferable.

Preferably, the baking temperature for the elastic layer is 150 to 300°C. This is because within this temperature range, the elastic layer is prevented from allowing volatile constituent to remain and from lowering its strength, and at the same time does not become deteriorated or hardened. The thickness of the elastic layer, after the baking, is preferred to be 30 to 2000 µm. This is because within this thickness range, the release layer can maintain its elasticity effect, and at the same time can have a thermal insulation property designed to be low for being able to exert energy saving effect. In particular, the range of 100 to 300 µm is more preferable.

Furthermore, the baking temperature for the support layer is preferred to be 150 to 300°C. This is because within this temperature range, the support layer does not lower its strength, and does not deteriorate the elastic layer, either. In addition, the thickness of the support layer, after the baking, is preferred to be 10 to 300 µm. This is because within this range, the support layer can maintain its strength and durability to abrasion without lowering its flexibility, and at the same time can have a thermal insulation property designed to be low for being able to exert energy saving effect. In particular, the range of 30 to 150 µm is more preferable.

The baking temperature for the first adhesive layer is preferred to be 330 to 430°C.

Regarding methods of separating the endless belt 1 from the molding die 7, not only the method as shown in Fig. 5 , but also other methods can be used, such as: a method for performing the inside-out reverse by injecting air into the interface between the surface of the support layer and the surface of the reversed release layer; a method for automatically performing the inside-out using a jig; and the like.

Besides, examples usable for the molding die according to the present invention are pipe-shaped molding dies made of brass, stainless steel, iron, aluminum, glass, and the like.

Furthermore, according to the present Embodiment, the endless belt can have a heat generating layer formed therein. It is also possible for at least one layer of the release layer, the elastic layer and the support layer to contain a filler made of the heat generating material.

### Embodiment 3

According to a method of the present Embodiment: a release layer formed of a fluororesin is coated on an outer circumferential surface of an annular molding die and is baked at a given temperature; thereafter a surface of the release layer is subjected to etching treatment; thereafter an elastic layer is coated on the etched surface of the release layer and is baked at a given temperature; thereafter an adhesive layer is coated on the elastic layer and is dried; and thereafter a support layer is coated on the adhesive layer and is baked at a given temperature. Subsequently, the endless belt is separated from the molding die by being reversed inside out and pulled in a manner similar to that in Embodiment 2. Thereby, an annular endless belt according to the present invention is completed, which has: as an outermost layer thereof, a release layer formed of a fluororesin and having an outer surface formed of a molded surface; a support layer as an innermost layer thereof; and an elastic layer disposed as an intermediate layer between the outermost layer and the inner most layer.

A commercially available fluororesin treatment agent (product of Junkosha Inc.: "Tetra-Etch" or the like) can be used for the etching treatment.

The thickness of the adhesive layer is preferred to be 2 to 10 µm. This is because within this thickness range, the adhesive layer has good adhesion, and becomes easy to coat.

Furthermore, it is preferred that the adhesive layer be formed of two layers which are formed of a primer for silicone rubber having a thickness of 1 to 5 µm and a fluoro rubber primer having a thickness of 1 to 5 µm, respectively. This is because owing to the two-layer structure, the adhesion between the elastic layer and the support layer can be more strengthened. Examples usable for the primer for the silicone rubber here are silan coupling agents such as vinylsilan, acrylsilan, epoxysilan, aminosilan and the like. Furthermore, examples usable for the fluoro rubber primer are fluoro rubbers VDF-HFP type, VDF-HFP-TFE type, VDF-PFP type, VDF-PFP-TFE type, VDF-PFMVE-TFE type, VDF-CTFE type, and the like.

The method here can be performed in a manner similar to that of the Embodiment 2, except that in place of using the first adhesive layer, an etching treatment is performed here. Thereby, even without using the first adhesive layer as used in the Embodiment 2, similar effects as therein can be obtained.

### Embodiment 4

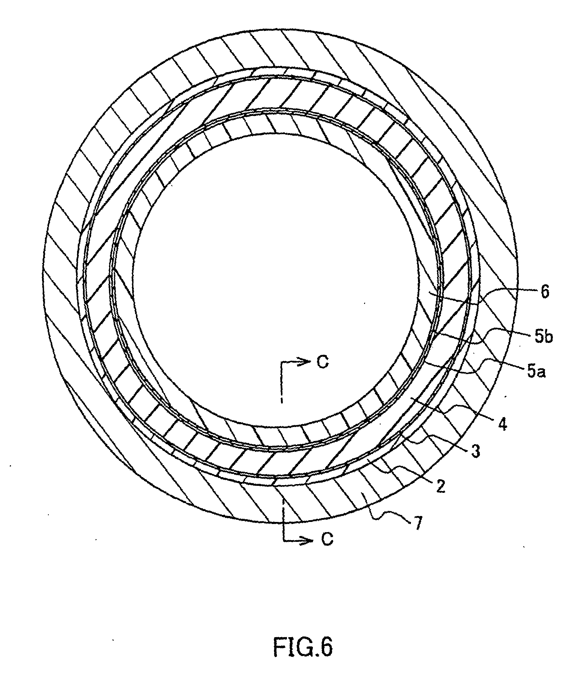

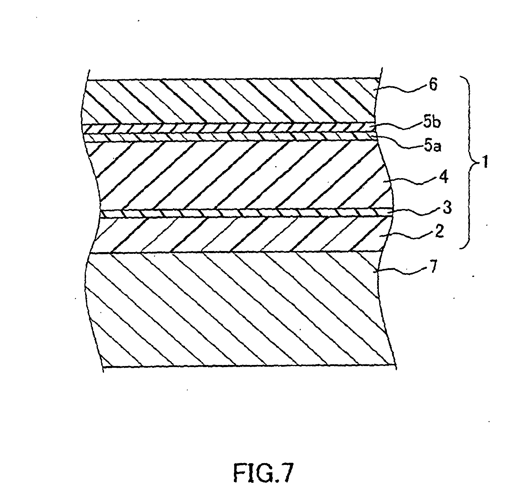

Fig. 6 is a cross-sectional view for explaining a further method of manufacturing an endless belt according to the present invention, and Fig. 7 is a cross-sectional view of a main portion of Fig. 6 at C-C plane. According to a method of manufacturing an endless belt in the present Embodiment: a release layer 2 is coated on an inner circumferential surface of an annular molding die 7; a first adhesive layer 3 is coated on the release layer 2; these are baked at a given temperature; thereafter an elastic layer 4 is coated on the first adhesive layer 3 and is baked at a given temperature; thereafter a second adhesive layer formed of two adhesive layers 5a and 5b is coated on the elastic layer 4 and is dried; and thereafter a support layer 6 is coated on the second adhesive layer 5b and is baked at a given temperature. Subsequently, the molding die 7 is cooled to room temperature. An endless belt 1 having shrunken a little by the cooling is then separated from the molding die 7. Other than the above-described process, similar process as in Embodiment 2 can be performed.

### Embodiment 5

According to a method of manufacturing an endless belt in the present Embodiment: a release layer formed of a fluororesin is coated on an inner circumferential surface of an annular molding die and is baked at a given temperature; thereafter the release layer is subjected to etching treatment; thereafter an elastic layer is coated on the release layer and is baked at a given temperature; thereafter an adhesive layer is coated on the elastic layer and is dried; and thereafter a support layer is coated on the adhesive layer and is baked at a given temperature. Subsequently, the molding die 7 is cooled to room temperature. An endless belt 1 having shrunken a little by the cooling is then separated from the molding die 7. Other than the above-described process, similar process as in Embodiment 3 can be performed.

Hereinafter, the present invention will be described in detail using Examples and Comparative Examples.

### Example 1

A molding die was prepared, which was formed of a pipe made of stainless steel (SUS304) having an inner diameter of 60 mm, a thickness of 3 mm and a mirror-polished outer circumferential surface. On the outer circumferential surface of the molding die, a polytetrafluoroethylene (product of Daikin Industries, Ltd.: "ED-4839BD") provided with electrical conductivity was coated to a thickness of 35 µm as a release layer. On the release layer, a fluoro rubber latex (product of Daikin Industries, Ltd.: "GL-252") as a fluoro rubber primer of a first adhesive layer was coated to a thickness of 10 µm, and was dried at 100°C for 15 minutes, and thereafter was baked at 380°C for 15 minutes. After the baking, the thickness of the release layer was 20 µm.

Next, after the molding die was cooled to room temperature, a silicone rubber (product of Shinetsu Silicone Co., Ltd.: "KE-1241"), as an elastic layer, was coated on the release layer, and was baked at 250°C for 30 minutes. After the baking, the elastic layer had a thickness of 200 µm and type A hardness (JIS hardness) of A10 degrees.

Subsequently, on the elastic layer, a primer for silicone rubber (Daikin Industries, Ltd.: "GLP-103SR"), as a first layer of a second adhesive layer, and a fluoro rubber primer (Daikin Industries, Ltd.: "DPA-362"), as a second layer of the second adhesive layer, were each coated to a thickness of 2 µm, and dried. After the drying, a polyimide varnish (product of I.S.T Corporation: "RC-5057"), as a support layer, was coated on the second adhesive layer, and was dried, and thereafter was baked at 250°C for 30 minutes. After the baking, the thickness of the support layer was 80 µm. After the molding die was cooled to room temperature, the thus manufactured annular body was taken out off the molding die by being reversed inside out and pulled as shown in Fig. 5, whereby an endless belt according to Example 1 of the present invention was obtained. No wrinkles were observed on the surface of the thus obtained endless belt.

### Example 2

An endless belt according to Example 2 of the present invention was obtained in a manner similar to that as in Example 1, except that a tetrafluoroethylene-perfluoroalkoxyethylene copolymer (product of DuPont Company: "540CL") having, as an additive, 2.5 wt% of conductive carbon was used here for the release layer. No wrinkles were observed on the thus obtained endless belt.

### Example 3

A molding die was prepared, which was formed of a pipe made of stainless steel (SUS304) having an inner diameter of 60 mm, a thickness of 3 mm and a mirror-polished outer circumferential surface. On the outer circumferential surface of the molding die, a polytetrafluoroethylene (product of Daikin Industries, Ltd.: "ED-4839BD") provided with electrical conductivity was coated to a thickness of 35 µm as a release layer, and thereafter was baked at 380°C for 15 minutes. After the baking, the thickness of the release layer was 20 µm.

Next, the molding die was cooled to room temperature, and thereafter the surface of the release layer was subjected to etching treatment using a fluororesin treatment agent "Tetra-Etch".

Subsequently, on the release layer, a silicone rubber (product of Shinetsu Silicone Co., Ltd.: "KE-1241"), as an elastic layer, was coated and was baked at 250°C for 30 minutes. After the baking, the elastic layer had a thickness of 200 µm and type A hardness (JIS hardness) of A10 degrees.

Thereafter, on the elastic layer, a primer for silicone rubber (Daikin Industries, Ltd.: "GLP-103SR"), as a first layer of an adhesive layer, and a fluoro rubber primer (Daikin Industries, Ltd.: "DPA-362"), as a second layer of the adhesive layer, were each coated to a thickness of 2 µm, and dried. After the drying, a polyimide varnish (product of I.S.T Corporation: "RC-5057"), as a support layer, was coated on the adhesive layer, and was dried, and thereafter was baked at 250°C for 30 minutes. After the baking, the thickness of the support layer was 80 µm. After the molding die was cooled to room temperature, the thus manufactured annular body was taken out off the molding die by being reversed inside out and pulled in a manner similar to that as in Example 1. Thereby, an endless belt according to Example 3 of the present invention was obtained. No wrinkles were observed on the surface of the thus obtained endless belt.

### Example 4

An endless belt according to Example 4 of the present invention was obtained in a manner similar to that as in Example 1, except that here the support layer (thickness of 80 µm) formed of the polyimide varnish (product of I.S.T Corporation: "RC-5057") was made to contain a filler made of a heat generating material. For the heat generating material, silver flakes having an average particle size of 9 µm was used. The mixing ration of the polyimide varnish to the silver flakes was: polyimide varnish / silver flakes = 1 / 2 in terms of volume ratio. No wrinkles were observed on the surface of the thus obtained endless belt.

### Example 5

A molding die was prepared, which was formed of a pipe made of chromium-plated brass having an inner diameter of 60 mm, a thickness of 3 mm and a mirror-polished inner circumferential surface. On the inner circumferential surface of the molding die, a polytetrafluoroethylene (product of Daikin Industries, Ltd.: "ED-4839BD") provided with electrical conductivity was coated to a thickness of 35 µm as a release layer. On the outer surface of the release layer, a fluoro rubber latex (product of Daikin Industries, Ltd.: "GL-252") as a fluoro rubber primer of a first adhesive layer was coated to a thickness of 2 µm, and was dried at 100°C for 15 minutes, and thereafter was baked at 380°C for 15 minutes. After the baking, the thickness of the release layer was 20 µm.

Next, after the molding die was cooled to room temperature, a silicone rubber (product of Shinetsu Silicone Co., Ltd.: "KE-1241"), as an elastic layer, was coated on the release layer, and was baked at 250°C for 30 minutes. After the baking, the elastic layer had a thickness of 200 µm and type A hardness (JIS hardness) of A10 degrees.

Subsequently, on the elastic layer, a primer for silicone rubber (Daikin Industries, Ltd.: "GL-103SR"), as a first layer of a second adhesive layer, and a fluoro rubber primer (Daikin Industries, Ltd.: "NF-731"), as a second layer of the second adhesive layer, were each coated to a thickness of 2 µm, and dried. After the drying, a polyimide varnish (product of I.S.T Corporation: "RC-5057"), as a support layer, was coated on the second adhesive layer, and was dried, and thereafter was baked at 250°C for 30 minutes. After the baking, the thickness of the support layer was 40 µm. After the molding die was cooled to room temperature, the thus manufactured annular body was taken out off the molding die, whereby an endless belt according to Example 5 of the present invention was obtained.

### Example 6

An endless belt according to Example 6 of the present invention was obtained in a manner similar to that as in Example 5, except that a tetrafluoroethylene-perfluoroalkoxyethylene copolymer (product of DuPont Company: "540CL") having, as an additive, 2.5 wt% of conductive carbon was used here for the release layer.

### Example 7

A molding die was prepared, which was formed of a pipe made of chromium-plate brass having an inner diameter of 60 mm, a thickness of 3 mm and a mirror-polished inner circumferential surface. On the inner circumferential surface of the molding die, a polytetrafluoroethylene (product of Daikin Industries, Ltd.: "ED-4839BD") provided with electrical conductivity was coated to a thickness of 35 µm as a release layer, and thereafter was baked at 380°C for 15 minutes. After the baking, the thickness of the release layer was 20 µm.

Next, the molding die was cooled to room temperature, and thereafter the surface of the release layer was subjected to etching treatment using a fluororesin treatment agent "Tetra-Etch".

Subsequently, on the release layer, a silicone rubber (product of Shinetsu Silicone Co., Ltd.: "KE-1241"), as an elastic layer, was coated and was baked at 250°C for 30 minutes. After the baking, the elastic layer had a thickness of 200 µm and type A hardness (JIS hardness) of A10 degrees.

Thereafter, on the elastic layer, a primer for silicone rubber (Daikin Industries, Ltd.: "GL-103SR"), as a first layer of an adhesive layer, and a fluoro rubber primer (Daikin Industries, Ltd.: "NF-731"), as a second layer of the adhesive layer, were each coated to a thickness of 2 µm, and dried. After the drying, a polyimide varnish (product of I.S.T Corporation: "RC-5057"), as a support layer, was coated on the adhesive layer, and was dried, and thereafter was baked at 250°C for 30 minutes. After the baking, the thickness of the support layer was 40 µm. After the molding die was cooled to room temperature, the thus manufactured annular body was taken out off the molding die, whereby an endless belt according to Example 7 of the present invention was obtained.

### Comparative Example 1

A polyimide tube having a thickness of 50 µm was prepared as a support layer. On an outer circumferential surface of this polyimide tube, a silicone rubber (product of Shinetsu Silicone Co., Ltd.: "KE-1241"), as an elastic layer, was coated, and was baked at 250°C for 30 minutes. After the baking, the elastic layer had a thickness of 200 µm.

Next, on the elastic layer after having been cooled to room temperature, a primer for silicone rubber (Daikin Industries, Ltd.: "GLP-103SR") was coated to a thickness of 2 µm as an adhesive layer, and was dried. Thereafter, on the adhesive layer, a fluoro rubber latex (product of Daikin Industries, Ltd.: "GLS-213") was coated as a release layer, and was baked at 250°C for 30 minutes, whereby a conventional endless belt according to Comparative Example 1 was obtained. Besides, the thickness of the release layer, after the baking, was 15 µm.

### Comparative Example 2

A polyimide tube having a thickness of 50 µm was prepared as a support layer. On an outer circumferential surface of this polyimide tube, a fluoro rubber latex (product of Daikin Industries, Ltd.: "GLS-213"), as an elastic layer, was coated, and was baked at 250°C for 30 minutes. After the baking, the elastic layer had a thickness of 100 µm.

Next, on the elastic layer after having been cooled to room temperature, a polytetrafluoroethylene (product of Daikin Industries, Ltd.: "ED-4839BD") provided with electrical conductivity was coated as a release layer, and was baked at 380°C for 30 minutes, whereby a conventional endless belt according to Comparative Example 2 was obtained. Besides, the thickness of the release layer, after the baking, was 20 µm.

Next, by using the endless belts according to these Examples and Comparative Examples each for a fixing belt in a color copier, they were subjected to tests regarding toner fixing property, release property and durability of release layer. The results of the tests are shown in Table 1.

By installing each one of the endless belts of the above Example 1, Example 2, Example 3, Example 4, Example 5, Example 6, Example 7, Comparative Example 1 and Comparative Example 2 as a fixing belt in a commercially available color copier (product of Minolta Co., Ltd.: "Color Page Works"), the tests were conducted as follows.

The fixing property test evaluates exfoliation property of toners fixed on a copy paper, and its results were categorized as good, moderate, and bad in accordance with degree of unevenness of toner images. The results of the release property were categorized as good, moderate, and bad in accordance with magnitude of such off-set phenomena that double images were produced by copying. The results of the durability were so categorized that, in terms of the number of papers needed to cause the fixing to become bad on the basis of an aging test (namely continuous paper feeding test), the cases of comparatively large, medium, and small such numbers were categorized as good, moderate, and bad, respectively.

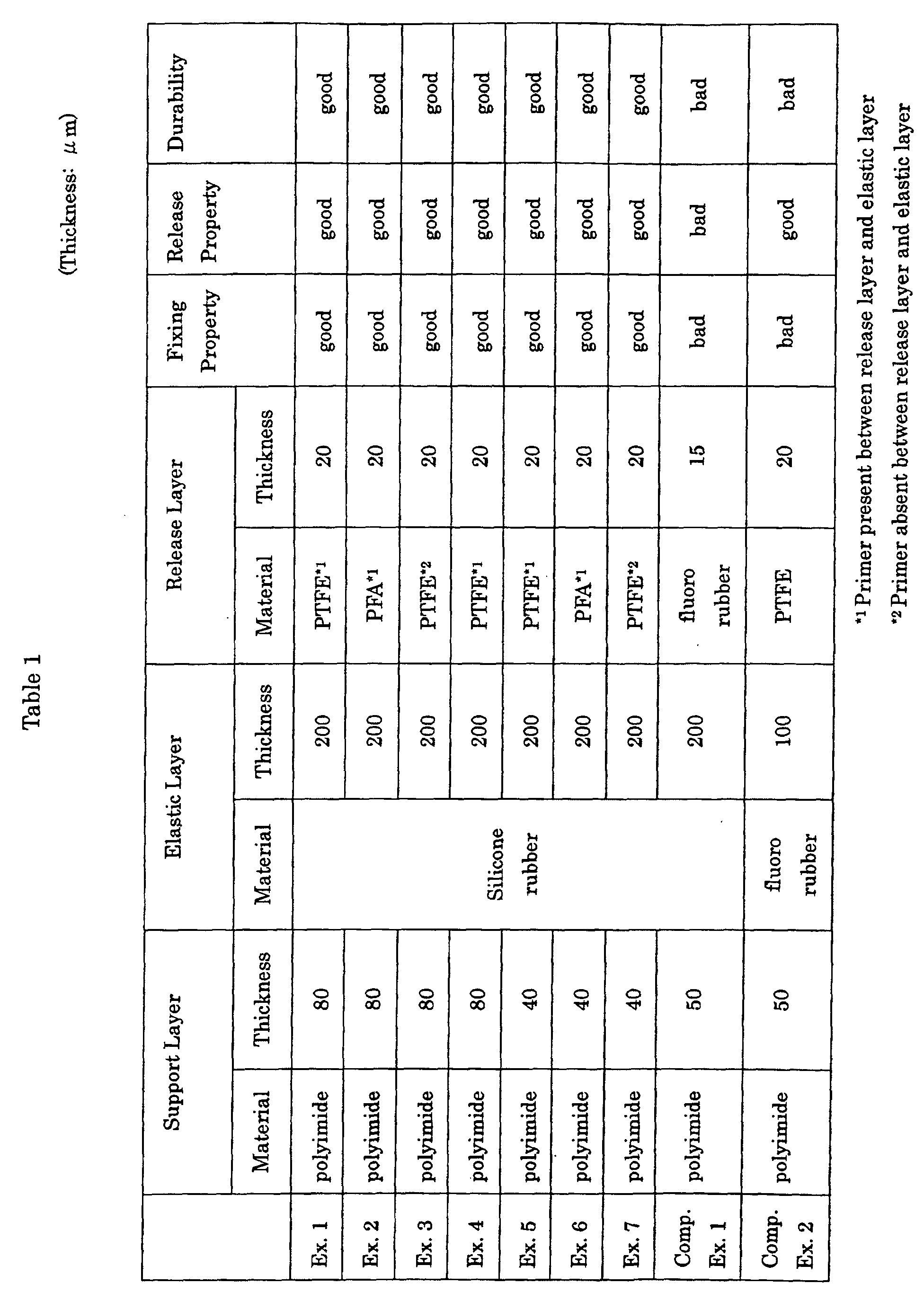

It is evident from Table 1 that the fixing belts of Examples 1 to 7 manufactured according to the present invention have superior properties in all of the toner fixing property, the release property, and durability.

The reason for the superiority of each toner fixing property in the case of Examples 1 to 7 is because the elastic layer is formed after the release layer is baked at high temperature, so that the elastic layer does not lose its elasticity by being hardened at high temperature. The release layer in each of Examples 1 to 4 is particularly superior in its fixing property, because it had no wrinkles existing thereon. The reason for the superiority of the toner release property and the durability of each release layer in the case of Examples 1 to 7 is because a fluororesin was used for the release layer. In addition, each release layer in Examples 1 to 7 has an outer surface formed of a molded surface, so that it is particularly superior in its releasing property.

On the other hand, the reason for the bad toner fixing property in Comparative Example 1 is because the toner release property therein is bad, thereby causing the fixing property to become likewise bad. In addition, the reason for the bad toner release property and durability of the release layer therein is because a fluoro rubber is used for the release layer.

Furthermore, the reason for the bad toner fixing property in Comparative Example 2 is because the release layer was baked at high temperature after the elastic layer was formed, so that the elastic layer lost its elasticity by being hardened at high temperature. In addition, the reason for the bad durability of the release layer therein is because the elastic layer deteriorates its property of adhesion to the release layer by being hardened, thereby causing the fixing property to deteriorate.

### INDUSTRIAL APPLICABILITY

As described in the foregoing, according to the endless belt of the present invention, a release layer formed of a fluororesin and having an outer surface formed of a molded surface is formed on an elastic layer without losing the elasticity of the elastic layer. This technology has been considered difficult conventionally, and thus has a significant industrial value.

## Claims

1. An annular endless belt comprising: as an outermost layer thereof, a release layer formed of a fluororesin and having an outer surface formed of a molded surface; a support layer as an innermost layer thereof; and an elastic layer disposed between the outermost layer and the inner most layer.

2. The endless belt according to claim 1, wherein the fluororesin is at least one member selected from the group consisting of polytetrafluoroethylene (PTFE), tetrafluoroethylene-perfluoroalkoxyethylene copolymer (PFA), and fluoroethylene-propylene copolymer (PFEP).

3. The endless belt according to claim 1, which comprises a heat generating layer.

4. The endless belt according to claim 1, wherein at least one layer of the release layer, elastic layer, and the support layer contains a filler made of a heat generating material.

5. A method of manufacturing the endless belt according to claim 1, which includes the steps of:
coating a release layer on an inner circumferential surface of an annular molding die;
baking the release layer at a given temperature;
coating an elastic layer;
baking the elastic layer at a given temperature;
coating a support layer; and
baking the support layer at a given temperature,
thereby forming an annular body, the annular body being thereafter separated from the molding die.

6. A method of manufacturing the endless belt according to claim 1, which includes the steps of:
coating a release layer on an outer circumferential surface of an annular molding die;
baking the release layer at a given temperature;
coating an elastic layer;
baking the elastic layer at a given temperature;
coating a support layer; and
baking the support layer at a given temperature,
thereby forming an annular body, the annular body being thereafter separated from the molding die by reversing the annular body inside out.

7. A method of manufacturing the endless belt according to claim 1, wherein:
a release layer is coated on an outer circumferential surface of an annular molding die;
a first adhesive layer is coated on the release layer;
the release layer and the first adhesive layer are baked at a given temperature;
thereafter an elastic layer is coated on the first adhesive layer and is baked at a given temperature;
thereafter a second adhesive layer is coated on the elastic layer and is dried;
thereafter a support layer is coated on the second adhesive layer and is baked at a given temperature, thereby forming an annular body; and
thereafter the annular body is reversed inside out, thereby separating the annular body from the molding die.

8. A method of manufacturing the endless belt according to claim 1, wherein:
a release layer is coated on an outer circumferential surface of an annular molding die and is baked at a given temperature;
thereafter a surface of the release layer is subjected to etching treatment;
thereafter an elastic layer is coated on the etched surface of the release layer and is baked at a given temperature;
thereafter an adhesive layer is coated on the elastic layer and is dried;
thereafter a support layer is coated on the adhesive layer and is baked at a given temperature, thereby forming an annular body; and
thereafter the annular body is reversed inside out, thereby separating the annular body from the molding die.

9. The method of manufacturing the endless belt according to any one of claims 5 to 8, which includes a step of forming a heat generating layer in the endless belt.

10. The method of manufacturing the endless belt according to any one of claims 5 to 8, wherein at least one layer of the release layer, the elastic layer, and the support layer contains a filler made of a heat generating material.
